(19) **Europäisches Patentamt**
**European Patent Office**
**Office européen des brevets**

(11) **EP 2 856 426 B1**

(12) **EUROPEAN PATENT SPECIFICATION**

(45) Date of publication and mention
of the grant of the patent:
**26.02.2020 Bulletin 2020/09**

(21) Application number: **13728505.2**

(22) Date of filing: **24.05.2013**

(51) Int Cl.:
**G06T 7/00** (2017.01)

(86) International application number:
**PCT/GB2013/051371**

(87) International publication number:
**WO 2013/175228 (28.11.2013 Gazette 2013/48)**

(54) **BODY MEASUREMENT**

KÖRPERMESSUNG

MESURE CORPORELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.05.2012 GB 201209382**

(43) Date of publication of application:
**08.04.2015 Bulletin 2015/15**

(73) Proprietor: **QuantaCorp**
**9051 Gent (BE)**

(72) Inventors:
- **WATSON, Eleanor**
**Redditch**
**Worcestershire B98 8LG (GB)**
- **EVANS, David**
**Birmingham**
**West Midlands B7 4BB (GB)**

(74) Representative: **Oxley, Robin John George et al**
**Marks & Clerk LLP**
**15 Fetter Lane**
**London EC4A 1BW (GB)**

(56) References cited:
**US-A1- 2007 101 268**

- **Alexandru O Balan: "Detailed Human Shape and Pose from Images", Doctoral Thesis, 1 May 2010 (2010-05-01), XP055069706, Providence, Rhode Island Retrieved from the Internet: URL:http://cs.brown.edu/~black/Papers/Bala nThesis2010.pdf [retrieved on 2013-07-04]**
- **MITTAL A ET AL: "Human body pose estimation using silhouette shape analysis", ADVANCED VIDEO AND SIGNAL BASED SURVEILLANCE, 2003. PROCEEDINGS. IEEE CONFERENCE ON 21-22 JULY 2003, PISCATAWAY, NJ, USA,IEEE, 21 July 2003 (2003-07-21), pages 263-270, XP010648393, DOI: 10.1109/AVSS.2003.1217930 ISBN: 978-0-7695-1971-5**
- **HAO JIANG: "Human Pose Estimation Using Consistent Max Covering", TRANSACTIONS ON PATTERN ANALYSIS AND MACHINE INTELLIGENCE, IEEE, PISCATAWAY, USA, vol. 33, no. 9, 1 September 2011 (2011-09-01), pages 1911-1918, XP011387229, ISSN: 0162-8828, DOI: 10.1109/TPAMI.2011.92**

EP 2 856 426 B1

**Description**

The present invention relates to a method and system for determining body measurements using images of the body. More specifically, the present invention defines a method and system for generating three dimensional body image data of a subject by comparison to a database of existing known three dimensional models to obtain a best mapping. From this mapping, body shape specific data can be determined, including measurements.

Conventional body scanners and body measurement devices rely on high resolution depth sensors, fixed patterns of light or known camera angles to generate three dimensional images of the human body. Such techniques require specialist equipment and present a high burden on the user who is required to travel to specialised centres for such body measurement.

Obtaining accurate three dimensional body measurement data is particularly beneficial in the medical field and may be used, for example, to monitor changes in body volume that may occur as a result of medical conditions, for example renal failure. By assessing the changes in the patient's body images, it is possible to determine factors such as water retention and surgery success. Indeed, with the rise of telemedicine, the need to monitor and provide information about body measurements is likely to grow.

Furthermore, being able to generate accurate body characterisation and measurement is also of particular interest in the clothing industry. It can be appreciated that being able to provide a clothing manufacturer or retailer with accurate body dimensions would be beneficial to both the person seeking clothes and the companies involved in the supply of clothes, this is particularly beneficial for online purchases.

Current methods and devices for providing such measurements are either large and expensive, and/or require the use of complex equipment including detectors capable of determining the per-pixel depth or distance of the subject relative to a reference point. As a result they do not allow subjects, such as private individuals and patients, to monitor their three dimensional body shape easily or at home. Being able to provide a three dimensional body image simply, without using dedicated complex body scanners is therefore desirable. The present invention seeks to address the above problems.

"Detailed Human Shape and Pose from Images", a thesis by Alexandru O. Balan relates to a data-driven model of the human body using a triangulated mesh model called SCAPE.

"Human Body Pose Estimation Using Silhouette Shape Analysis", a paper by Anurag Mittal relates to an automatic system for human body pose estimation from multiple views.

"Human Pose Estimation Using Consistent Max Covering", a paper by Hao Jiang relates to a consistent max-covering method for human pose estimation, focusing on problems in which rough foreground estimation is available.

According to the present invention there is provided a method of generating three dimensional body data of a subject from one or more source images according to the appended claims.

According to the present disclosure there is provided a method according to claim 1.

Optionally one or more pre-processing stages may be applied to the one or more source images to enhance the available data prior to segmentation;

Partitioning the one or more images into a plurality of segments may comprise applying one or more image segmentation techniques, heuristics and/or predetermined mappings to partition the one or more enhanced images and/or original images into a plurality of segments and/or probability distributions;

Combining the results of each segmentation method may comprise using mathematical equations and/or heuristics.

Optionally an additional segmentation technique seeded with the results of step iii) may be applied to produce a refined unique probability map for each source image;

Comparing the one or more unique probability maps with a database of representations may comprise determining a best mapping between each or all of the unique probability maps and the database of existing known three dimensional models by applying a Gradient Descent method to minimise the difference between computer-generated silhouettes of the three dimensional data and the probability maps

Generating three dimensional body data and/or measurements may further comprise outputting three dimensional body data of the subject or other personal metrics based on the best mapping from step iv).

The invention allows for data representative of the three dimensional body image of a subject to be generated cheaply and easily based on 2 dimensional images obtainable from a webcam, cameraphone or other image capture device. Additionally, because dedicated imaging equipment is not necessary, a subject can easily update their generated three dimensional body image, allowing changes to their body shape to be easily tracked and monitored.

Generally, one or more probability maps and heuristic methods can be provided which identify the expected shape and pose of the subject in the one or more images. Typically, the probability maps are pre-rendered probability maps stored on the server either generated from earlier images and/or obtained from a pre-existing database of probability maps, and the heuristics are coded methods within the system. For example, if the subject poses in the images to present their left and right side profiles, the probability maps provided and heuristics applied are representative of the respective profile. In this case, an image with a subject posing in a left side profile pose can be compared to a left side profile probability map and processed using segmentation heuristics known to apply to left side profiles.

The one or more probability maps can also be provided based on the determined pose of the subject. The pose of the subject can be determined by feature tracking the subject in a sequence of frames, which may be from a video feed. A typical method of feature tracking utilises Lucas-Kanade Pyramids to calculate the optical flow of keypoints of the subject between images (or frames if applied to video). By taking a frame where the subject's position is known, key points in the image can be located (for example using corner detection techniques). Such points may be fingers, patterns on clothing, tattoos, skin blemishes etc.). A Lucas-Kanade Pyramid technique can then be used to follow these points between frames (or images). The points may be rechecked every few frames to prevent slippage. Such a technique allows the pose of the subject within images to be guessed more accurately and further allows the one or more probability maps to be provided based on the determined pose. Such a pose determination technique increases the flexibility of the system and is particularly useful for determining the pose of subjects from video.

In embodiments of the present invention, the pre-processing stage ii) may include:

- rescaling the image to reduce computational overhead;
- applying noise reduction filters such as Anisotropic Diffusion;
- counteracting known camera characteristics, such as barrel distortion and patterns introduced by the layout of pixels within the CCD (Charge-Coupled Device) sensor;
- applying a per-pixel lighting boost to enhance details in shadow, typically this would follow the formula $I_{new}(\mathbf{x}) = I_{raw}(\mathbf{x})^{\alpha}$ where $\mathbf{x}$ is the current pixel, $I_{new}(\mathbf{x})$ is the enhanced intensity value for the pixel x (between 0 and 1), $I_{raw}(\mathbf{x})$ is the original intensity value for the pixel x (between 0 and 1), and $\alpha$ is a number which may be constant or based on properties of the image. Embodiments may vary $\alpha$ according to the location within the image, such as boosting the bottom of the image more strongly as in this example:

$$\alpha_t = \frac{log(b)}{log\left(I_{raw}(x \in top\ quarter\ of\ image)\right)}, \quad \alpha_b = \frac{log(b)}{log\left(I_{raw}(x \in bottom\ quarter\ of\ image)\right)},$$

$$\alpha = \alpha_t + \frac{y}{h}\left(\alpha_b - \alpha_t\right)$$

where **y** is the current pixel's vertical coordinate and **h** is the height of the image.

Additionally the collection of image segmentation methods applied to the one or more images in stage iii) may include:

- invariant methods, such as pre-rendered probability maps for a particular view:

- per-pixel or moving-window comparisons, for example looking for pre-determined ranges of colour which correspond to skin tones or a texture which matches denim;

- learning-based techniques, for example locating a face in a front view to learn the individual's skin colour and/or clothing colours, and/or using the chosen pre-rendered probability map to learn the background colours. The identified colours (in RGB space or otherwise) and/or locations (in image space) can be analysed (for example using a Gaussian Mixture Model) to produce an expected colour distribution for each segment, which may then be used to generate a segmentation of the image;

- iterative optimisations, for example using Active Contours (seeded with a pre-defined human shape according to the current view and/or pose detected by other methods) to maximise the image's edge intensity along the perimeter of the contour, which may also be combined with rigid-body or soft-body simulations for enhanced results:

- comparing regions of pixels in one view against the corresponding region in another view, for example comparing the left and right sides of front-with-arms-out and sideview images to identify arms (assuming the background remains constant between the images). Embodiments may include an additional image of only-background (subject out of frame) for this purpose;

- edge analysis techniques, for example searching for edges with particular properties such as a semi-circle shape (corresponding to feet) or particular angle (corresponding to arms, legs, or torso). Edges may be detected using one or more techniques such as application of the Sobel Operator, the Canny Edge Detector algorithm, and custom methods;

- generalised segmentation methods such as the Graph Cut method or multi-scale methods such as Segmentation by Weighted Aggregation;

- customised heuristics, such as identification of shoulder points in a front view to define a region for the torso, or identification of intersecting lines to locate armpits and the crotch point.

Typically the methods are applied to the image encoded in YCbCr space, with some methods using only the luminosity channel and others potentially assigning extra weight to the Cb and Cr channels, however other colour spaces such as RGB or sRGB can be used.

Segmentation methods which return a plurality of segments (for example: head, shirt, chair, desk) may be further processed by analysing the shape, colour, texture and/or position of each segment. By comparing these metrics against predefined or otherwise calculated expectations, the segments can be reduced into a simpler foreground/background binary, or given a per-segment probability.

If multiple segmentation methods are used, embodiments may combine their results into a single unique probability map per view via various methods. The method used may depend upon the current view and/or segmentation method, or several methods can be attempted, with a rating function deciding the best result. Possible methods for combining results $p_1$ and $p_2$ into $p_T$ include:

- averaging: $p_T = \dfrac{p_1 + p_2}{2}$ ;

- adding regions known to be the subject: $P_T = max(p_1, p_2)$;

- adding regions known to be the background: $P_T = min(p_1, p_2)$;

- combining probabilities: $p_T = \dfrac{p_0 p_1}{p_0 p_1 + (1 - p_0)(1 - p_1)}$ with special cases for $p_0 = 0, p_1 = 1$ and $P_0 = 1$, $p_1 = 0$ ;

- more complex methods such as $P_T = P_0^{2n(0.5 - p1)}$ for some $n > 0$ or $P_T = 2Ap_1^2 - (A + 2(x^c - x))y + x^c . A = 1 - (1 - x)^c + x^c - 2x$ for some $c > 1$. These particular methods are applicable when $P_0$ contains some base expectation (such as a pre-rendered probability map) which must be adjusted according to $P_1$ but maintain hard limits.

It may be appreciated that many of these methods trivially extend to combine more than two results, or can be chained to combine arbitrary numbers of segmentation results. It may also be appreciated that weightings can be applied to each segmentation at this stage, determined manually, empirically, and/or automatically based on properties of the segmentation (such as degree of symmetry).

After producing a single unique probability map for each source image, embodiments may refine the map by the use of further segmentation techniques, such as Segmentation by Weighted Aggregation or Grab Cut. In the case of a Grab Cut, an input of "known foreground", "probably foreground", "probably background" and "known background" is given, which can be generated using trivial thresholding of the probability maps. It can also be appreciated that this 4-state map, or variations thereupon, could be considered as probability maps in their own right, and could therefore be the direct output of previous segmentation stages.

Embodiments of the invention further allow for compensation for variable line sharpness produced by uneven lighting conditions in the source images, with the same method also allowing the final probability maps to be upscaled to equal or greater resolution than the original source images. This is achieved by blurring of the edges of the unique probability map generated by the above method to produce a boundary of uncertain pixels. The blurring of the edges results in a probability gradient in the unique probability map from the background to the subject. The direction and strength of this gradient can then be identified and used to indicate the direction to the subject at each uncertain pixel with a vector line. Typically, the direction of this vector line is substantially perpendicular to the edge. From these gradients a vectored outline probability map can be generated, said map providing a direction vector (vector line) for each uncertain pixel (typically edge pixels) denoting the local expected direction of the subject relative to the pixel.

The vectored outline probability map can then be applied to the original image or images. By following the path indicated by the vectored outline probability map as applied to the original image, it is possible to determine the pixels in the original image that lie on each vector line with the highest contrast. These pixels represent the boundary pixels located on the edge of the subject, which separate the subject from the background of the image. This boundary is optimal in the case of no noise and any blurring of the image being gaussian, which is a good approximation for camera images. Additionally, comparing the colour and/or intensity of the boundary pixel with the colours and/or intensity of neighbouring pixels can enable an estimated true boundary for each boundary pixel to be ascertained with sub-pixel resolution. The estimated true boundary for each boundary pixel may be calculated using: $b_\delta = 1 - \dfrac{c_B - c_A}{c_C - c_A}$, where $b_s$ gives the distance along the vector between the pixel boundary and the true sub-pixel boundary, $c_E$ is the intensity of the current pixel, $c_A$ is the intensity of the previous pixel along the vector and $c_C$ is the intensity of the next pixel along the vector. Once the estimated true boundary has been determined, this can be applied to the corresponding location on the unique probability map to provide an estimated true boundary for each boundary pixel of the unique probability map.

The final unique probability maps provide an outline of the subject for each view, where the regions determined to definitely be the subject have a probability close to 100%, the regions determined to be background (definitely not the subject) have a probability close to 0%, and edge regions have probabilities in-between. Typically, said unique probability maps have a resolution of 0.2 to 0.5 pixels depending upon the noise levels in the source images.

Embodiments of the present invention may compare the one or more unique probability maps with an existing database of three dimensional body representations to determine a Closest Match and/or may use an interpolation method to generate new bodies from the existing database to determine a Best Mapping. The existing database is typically populated with empirical data collected from dedicated body scanners. Such representations may include three dimensional body measurements, measurements of the subjects taken manually, and/or scans.

To determine the Closest Match, the test scans can be exhaustively searched, optimising each for pose and camera variations and determining the best result as below, though it may be appreciated that optimisations such as grouping the scans by particular properties (such as gender, weight, age) may be applied to reduce the search space, and an ordering could be applied to enable an approximation of a Binary Search. However, determining the Closest Match cannot offer results which are not already present in the database, and for this reason the Best Mapping is preferred. The following paragraphs will describe the process used in finding a Best Mapping.

Linear interpolation may be used to generate new scans from the existing database, which is advantageous as it allows the use of Linear Optimisation methods to identity the Best Mapping. An average three dimensional body representation and a series of vectors describing variations of the normalised three dimensional body representations within the existing database ("Body Vectors") may be pre-generated via Principle Component Analysis. This stage may include methods to normalise the pose of each subject and/or infer missing data (for example occluded regions of scans from structured-light scanners). The results of this analysis will typically be recorded in advance and retrieved as required, and are referred to as the "Space of Bodies". Embodiments may also include measurement data in this analysis; producing average measurements and a LOOKUP table denoting how each measurement must be changed as the contribution of each Body Vector is altered (for example, if a Body Vector controls the weight of the scan, it will typically increase the waist circumference as the scan's size increases). These correlations will typically be generated automatically and may have no obvious physical interpretation. To ensure the applicability of Linear methods, the measurements may be pre-processed to produce linearly-related values (for example taking the cube root of any volumetric measurements and decomposing elliptical measurements into major and minor axes and a scaling factor).

In embodiments, only selected body image data is generated, with areas of the subject discounted or discarded. Such exclusions may be undertaken by utilising probability maps that do not include areas of the subject, such as the head area, or by discarding features after segmentation. This can be advantageous as it allows features from the body image data that do not relate to actual body size, such as hair, to be excluded. Excluding these features prevents seemingly arbitrary details such as hair style influencing results.

The Space of Bodies may be searched using a Gradient Descent method, with variables controlling the camera (e.g. position, rotation, field-of-view), pose (e.g. joint angles) and body shape (e.g. the first **N** Body Vectors, where typically $N \simeq 40$) of the scan. This typically involves starting with an average or rough guess for each variable and iteratively refining the value through trial-and-error. The Newton-Raphson method is one possible option, and may be used to minimise the sum of the absolute differences of probabilities for each pixel in a computer-generated silhouette against the calculated unique probability map for the current subject. Mathematically,

$$\operatorname{argmin}\left( \sum_{x \,\in\, image} \left| p_{unique}(x) - p_{calc}(x,\ camera,\ pose,\ shape) \right| \right)$$

Where $P_{unique}(x)$ is the value of the unique probability map at the current pixel and $P_{calc}(x,c,p,s)$ is 1 if the computer generated silhouette for the current camera **c,** pose **p** and body shape **s** contains the current pixel and 0 otherwise **camera, pose** and **shape** are the arguments to search. It should be noted that the use of the absolute value function is chosen to optimise the Newton-Raphson search, which requires a quadratic function. For other search methods different costs may be appropriate, such as a sum of squares. It may also be beneficial to use a secondary distance function to quickly discard local minima. For example taking the sum of the minimum distances from each of the computer generated silhouette's pixels to a pixel in the unique probability map which has a value above a predetermined threshold c (such as $c = \frac{1}{2}$ ). Again this is optimised for a Newton-Raphson search. Mathematically,

$$\text{argmin} \left( \sum_{x \in p_{calc}(x, \, camera, \, pose, \, shape)} min\left( \left| y \right| : p_{unique} (x + y) > c \right) \right)$$

Boundaries, such as increasing the cost of the function as arguments vary beyond reasonable limits, are beneficial for preventing unrealistic outcomes. For example including a soft limit as leg separation becomes too wide, with a hard limit after a known impossible separation or separation which docs not match the requested pose. Similar principles can be applied to body shape and camera properties.

The body shape is optimised across all views, and the pose and camera properties are per-view. It can be appreciated that in controlled environments multiple pictures can be taken simultaneously, in which case the pose becomes a property which may be optimised across all views as well. Fixed camera positions and properties can further allow the camera variables to be removed from this stage entirely.

In embodiments. this minimisation stage may be achieved by minimising for small numbers of parameters in sequence for improved speed. For example varying the camera and pose variables while locking the body shape variables, then varying the first 5 Body Vectors while locking all others, then varying the first 15 Body Vectors and camera variables, etc. The precise sequence may be determined empirically in advance and/or automatically as a result of analysing the current state (for example giving more time to the optimisation of leg position if it has previously changed significantly).

The end-result of this stage is a unique three dimensional scan for the subject. The same principles apply to finding a Closest Match, but involve iterating through all scans in the database in the place of varying the Body Vectors. In either case the resulting scan (ignoring pose) will now be referred to as the "unique three dimensional scan".

Once the Closest Match or Best Mapping has been obtained, embodiments may calculate measurements using the measurement LOOKUP table and/or measuring paths on the unique three dimensional scan. For a Best Mapping, the determined Body Vector values are used in combination with the LOOKUP table to linearly interpolate the average measurements, producing a unique set of measurements. For a Closest Match, the measurements may be retrieved directly from the LOOKUP table. These measurements are all unscaled, and may be scaled according to several factors including: a known measurement (for example the subject's height); a determined distance between the subject and the camera (for example using a hardware depth sensor or known environment); and/or comparison against a calibrated known object (for example a marker or common object such as a sheet of paper). In the absence of this information, a scale can be approximated by assuming it is similar to that of known subjects with similar body shape (for example a relatively larger head usually implies a smaller scale). This approximation can be calculated using the same LOOKUP methods as for other measurements. At this stage, the measurements will typically be un-normalised; volumes cubed, the circumference of decomposed ellipses recalculated, and so on.

Furthermore, in embodiments the three dimensional body data of the subject can be outputted. The data can be output to one or more of a storage device, online cloud based storage, a mobile phone, a display screen or a personal computing device.

Embodiments of the present invention will now be described, with reference to the following figures, in which:

Figure 1 is a schematic overview of the present invention;

Figure 2 is a flowchart of the present invention relating to data collection;

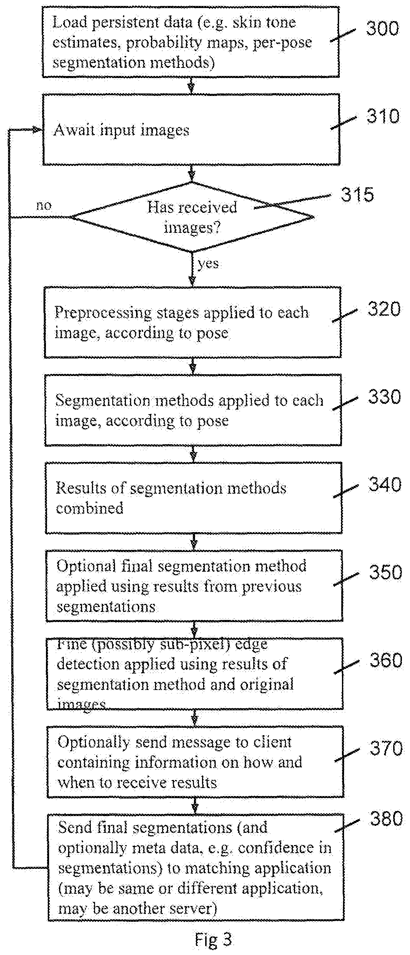

Figure 3 is a flowchart of the present invention relating to methods used to generate unique probability maps;

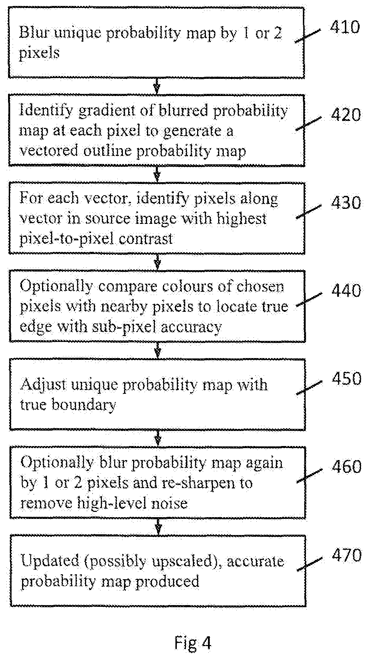

Figure 4 is a flowchart of the present invention relating to improving the unique probability map; and

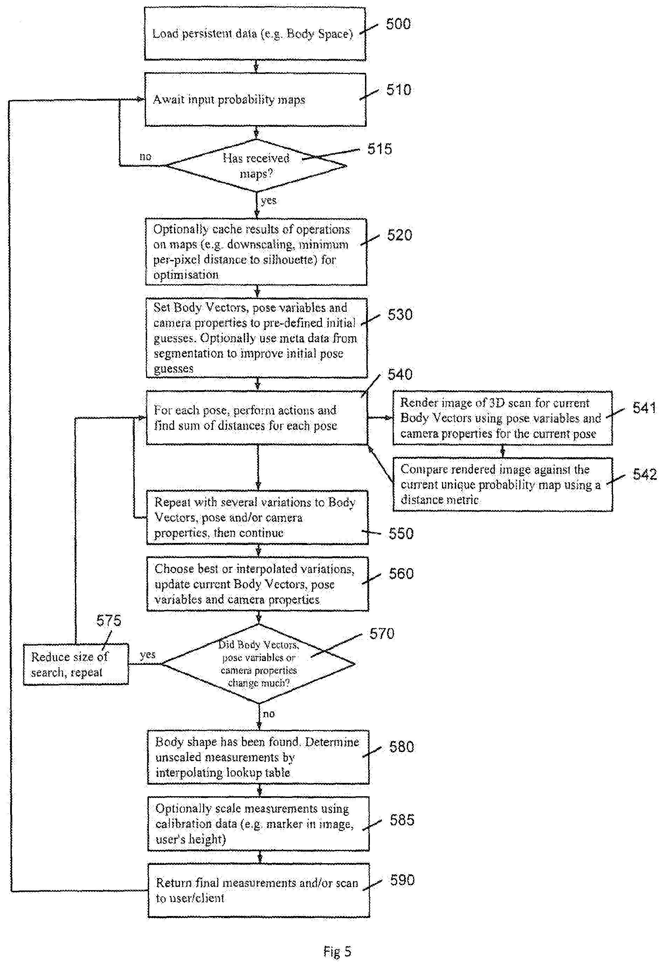

Figure 5 is a flowchart of the present invention relating to generating a three dimensional body image based on the unique probability map and reference three dimensional body representations.

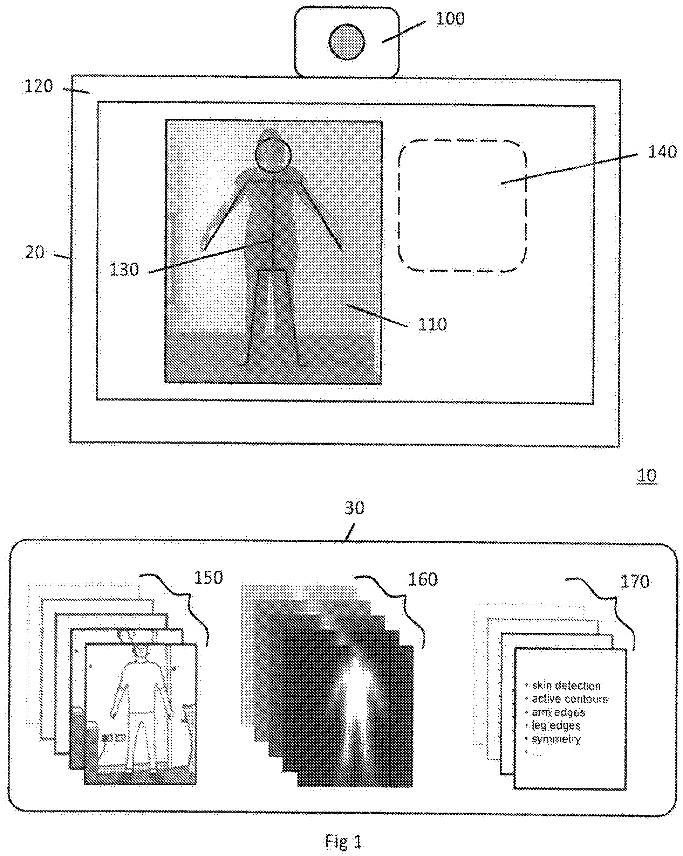

According to the present invention there is provided a method of generating three dimensional body data of a subject from one or more source images, as defined in claim 1. Referring to the figures, system 10 (figure 1) is provided with an input 'dumb' client system 20 and a server unit 30.

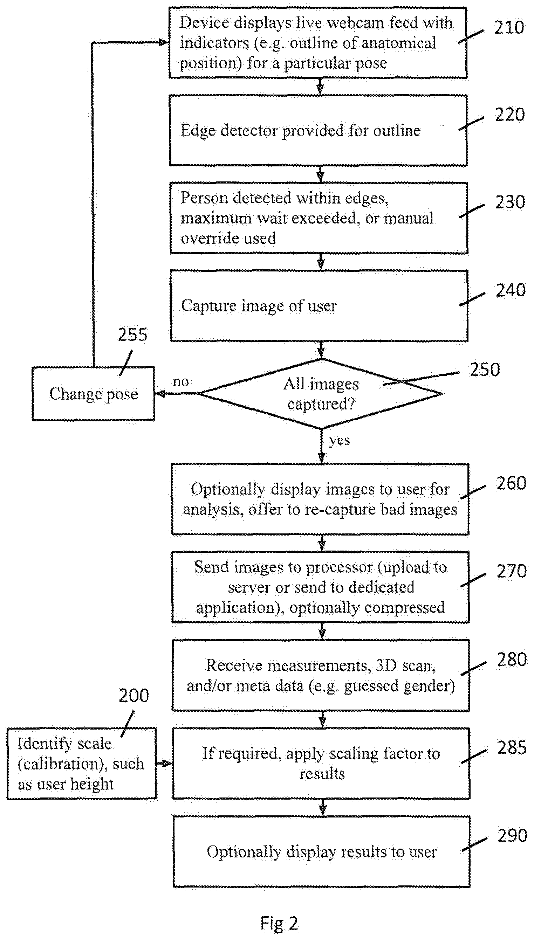

The client system 20 comprises a webcam 100 that is used to capture image information from a subject. In use, the webcam 100 is used in conjunction with a screen 120, such as a computer monitor, that displays a representation 110 of the subject. The software controlling the webcam 100, when the webcam is activated, issues a command to the screen 120 such that the screen 120 displays a representation 130 corresponding to a posed position. Typically the posed position required is face-on, with legs and arms spaced apart from the body; the anatomical position. Additionally, side profile positions (along the median plane) may also be requested 225 (figure 2).

When the representation 110 of the subject displayed on the screen aligns with a predetermined outline 220, the subject is deemed to be "in pose" (this may also depend upon remaining stationary for a few seconds). When the subject is ready, and the condition that the subject stand in the requested posed position 130 is satisfied, the webcam 100 takes a sequence of images 150,240 of the subject in the posed position. Once the requisite number of images has been collected, the images are compressed and stored for subsequent upload to the server unit 30, 270.

It can be appreciated that the above steps may be repeated as many times as desired to generate a larger database of posed subject images. Furthermore, as an alternative to a webcam, mobile phone cameras may be used to capture the required images. In such case, the screen 120 and software to run the image capture and issue commands to the subject may be on the phone itself using a dedicated application. It may also be appreciated that a conventional camera may be used for generating the images as well as other known image capture devices and software. Frames from video sources may also be used.

In addition to the capture of images, the client system 20 can request additional information 140 from the subject to assist the calibration and image identification process. As an example, calibration data to identify relative scales in the two dimensional images may be collected by requesting the height of the subject 200. Other options include asking the subject to hold a calibrated marker to the camera, such as a playing card. Further questions may assist in image processing, such as general amount of and/or colour of worn clothing.

Optionally, the client system 20 may also perform rudimentary checks on the taken and stored images 240. These checks may include analysing the images for background features and requesting that the subject move to a different area if too many background features are detected. Such analysis may also allow a further calibration between the relative height of the subject captured images as, if a common background feature is found, this can be used to ensure all the images of the subject are of a consistent height, to account for variable distance between the subject and the imaging device. Alternatively, or additionally, said analysis can remove common background features (to aid subsequent steps) or may require new images to be obtained if too many background features are detected.

Once images 150 have been captured by the client system 20, they are uploaded to the server unit 30. 270. The server unit 30 may be a subject's computer or smartphone or the like, although typically the server unit 30 is a dedicated off site server. The server comprises a database of known probability maps 160 corresponding to expected locations of the subject based on the posed positions that the subject was instructed to stand in 300, and a collection of segmentation methods 170 which have been determined to be applicable to each pose. Alternatively, the pose of the subject may be determined using a feature tracking technique. A typical method of feature tracking utilises Lucas-Kanade Pyramids to calculate the optical flow of keypoints of the subject between images (or frames if applied to video). By taking a frame where the subject's position is known, key points in the image can be located (for example using corner detection techniques). Such points may be fingers, patterns on clothing, tattoos, skin blemishes etc.). An optical flow technique can then be used to follow these points between frames (or images). The points can be rechecked every few frames to prevent slippage. Such a technique allows the pose of the subject within images to he guessed more accurately and further allows the probability maps to be provided based on the determined pose. Such a pose determination technique increases the flexibility of the system and is particularly useful for determining the pose of subjects from video.

Initially, the server unit 30 analyses the incoming images and pre-processes them 320 to normalise lighting, detect and removing patterns in the images introduced from CCD (Charge coupled device) sensors or the like, such as Active Pixel Sensors (APS) and correct barrel distortion or other known defects. From these filtered images, the server 30 then determines what is likely to be the representation of the subject 110, rather than the background or noise 330-360.

In order to determine the location of the subject within the image, the server 30 applies various image segmentation techniques 330 which have been chosen in advance for the particular pose. These may include manually or automatically tuned methods which produce best results in specific areas of the image, as well as more general methods, and may use both the pre-rendered probability maps 160 and pre-processed source image(s). The segmentation methods may also share results with other segmentation methods (e.g. a hand detector may reduce the search space required by an arm detector). The results of each segmentation method are combined 340, allowing the server to generate a first estimate at the object's (subject) shape. The pre-rendered probability maps 160 can further be used to tune the silhouette identified by aiding in the removal of background objects which may have been incorrectly identified. For example, a colour distribution analysis may identify a colour (e.g. red) as representative of the subject, however if the background contains an identical colour, this will be identified as representative of the subject if based on the colour distribution alone. By combining the colour distribution with the probability map, such background features can be eliminated.

Once a first estimate of the subject's body shape has been determined, and a unique probability map created, the system undertakes a further step to compensate for variable lighting conditions in the source images that affect line sharpness. In order to compensate for this variable line sharpness, the system deliberately blurs the edges present within the probability map 410. This blurring is typically in the order of 1 or 2 pixels (in essence the line is anti-aliased) and may be combined with an upscaling of the probability map for greater accuracy.

By blurring the edges of the generated probability map, the system is aided in determining the direction of pixels in relation to the expected position of the subject 420. As the probability map is a high contrast greyscale image, the system can identify areas (of uncertain pixels) where the change of highest contrast occurs, and assign directionality to that change and those pixels. This direction is normal to the edges of the probability map and identifies the direction of the subject (the white of the probability map) at all pixels within the uncertain (blurred) edge points.

Once the directionality of an uncertain pixel is determined, this can be applied to the original RGB image to find areas (of pixels) with the highest contrast, i.e. where the gradient between neighbouring pixels is greatest 430. This determination allows the boundary of the subject in the RGB image to be determined accurately within a resolution of one pixel. Furthermore, improved, sub-pixel, resolution may be obtained by comparing the boundary pixel to neighbouring pixels to obtain an indication of the true boundary position 440. This may be achieved by determining the colour gradient between the boundary pixel and neighbouring pixel and assigning an estimated true boundary position at the point where the gradient is greatest. An indication of the true estimated boundary position is given by: $b = 1 - \dfrac{c_B - c_A}{c_C - c_A}$, where **b** is the true estimated boundary, $c_B$ is the intensity of the current pixel, $c_A$ is the intensity of the previous pixel along the vector and $c_C$ is the intensity of the next pixel along the vector. This step represents an accurate inverse ant-aliasing step for two blocks of solid colour and therefore is especially useful for accounting for anti-aliasing introduced by CCD sensors.

Once the boundary has been determined in the RGB image, this information is then utilised in the probability map to provide an accurate representation of the edge of the generated probability map 450. Noise introduced by the edge identification process can be reduced by blurring the identified edge by $\pm 1$ pixel and re-smoothing 460. The end result of this stage is a sequence of accurate, input-specific, probability maps 470. one per source image 150.

With the sequence of accurate, input-specific, probability maps, it is now possible to perform a mapping of these probability maps to pre-calculated average body shapes to attempt to generate the final three-dimensional body shape of the subject. This is achieved by using a database containing a pre-calculated average body shape and extracted principal components "Body Vectors" which are stored on the server as follows. A Body Vector or Eigenbody is similar to the known term Eigenvector or Eigenface and is a representation of how a body may vary (increases in hips leads to corresponding increase in bust etc.). It is calculated in advance using principle component analysis. For example, a particular body image may comprise of an average body shape plus 60% of Body Vector 1, -12% of Body Vector 2 and 18% of Body Vector 3. This allows a mathematical representation of a body scan to be stored without storing the scan itself. Furthermore, the pose of the pre-calculated average body can be selected or calculated to correspond to the pose of the subject as previously determined.

This database of body variations is preloaded by the server 500. When a series of unique probability maps are received 515, the server will perform a search over the Body Space (the possible bodies generated from the average body and Body Vector combinations) to find the Best Mapping 530-575. Initially the Body Vectors are assigned contributions of zero (producing an average body with no variation), and per-pose sensible defaults are assigned to the camera and pose variables (e.g. camera position, arm separation), 530. These defaults may be altered according to features identified by the segmentation methods 330. The corresponding body is rendered for each pose 541, and these renderings are compared against the unique probability maps. 542. The distance function used may be a simple mean-absolute-difference per-pixel, or something more complex, such as a sum of minimum distance between edge pixels. Multiple methods may be used together, for example using minimum distance between edge pixels to determine pose and camera properties, then using mean-absolute-difference to tune the body shape. These methods may benefit from pre-caching of values 520 to improve response times.

By repeatedly varying certain properties (such as a Body Vector's contribution) and re-measuring the distance between rendered scans and the observed unique probability maps 540-575, the Body Vectors, pose variables and camera properties can be iteratively refined. Typically this involves sampling a few variations 550 then fitting a simple mathematical shape (such as a parabola) to the distances to identify a likely minimum-distance. The values at this minimum can then be checked, and the overall minimum from all samples chosen 560, then the search space is reduced and the process repeated. Once the search space is small enough, the process terminates and the final values represent the Best Mapping 580. Typically this optimisation stage will be repeated several times, each time with certain variables "locked" and others "free", for example an initial search may lock all Body Vector contributions, varying only the camera properties and pose variables, and this could be followed by locking the camera while refining the first 5 Body Vectors and rough pose, etc.

The final body shape, pose and camera properties will produce a silhouette which most closely resembles the unique probability maps. It can be appreciated that in systems with known hardware, the camera properties may be known in advance and will not need to be included in this process. Furthermore, in systems with multiple cameras, it may be known that the subject's pose is identical across several images, and a global (rather than per-image) pose may be used.

When the iterative search is complete and a Best Mapping determined, the server can store the three dimensional body data according to its Body Vector contributions. Measurements relating to the three dimensional body shape can be retrieved using a lookup table 580 based upon the average body shape and the Body Vector contributions. Such measurements can include physical measurements such as waist circumference, chest circumference etc., as well as more abstract information, such as gender, age, etc. This lookup table is sourced from known empirical body dimensions generated from precise and accurate full body scanners typically used in hospital environments. The calculated silhouette of best match may then be fed back into the pre-rendered probability maps, potentially increasing the accuracy of the segmentation steps in future uses.

Once a true approximation of the three Dimensional body shape of the subject has been calculated, the body shape and the corresponding measurements can be scaled up to the subject's size by taking into account their entered height or other calibration information 585, though this could also be performed at a later stage by the client 285. Finally, the three dimensional scan and/or measurements can be displayed to the subject 290.

## Claims

1. A method of generating three dimensional body data of a subject from one or more source images captured using a digital imaging device (100); said method comprising the steps of:

   (i) capturing one or more source images (150) of the subject using a digital imaging device (100);
   (ii) partitioning the one or more source images (150) into a plurality of segments using results from a collection of segmentation methods (170);
   (iii) combining, using a weighting of segmentation methods (170) in areas of disagreement, the results of each segmentation method in step (ii) to produce, for each source image (150), a single unique probability map (160) representing the subject;
   (iv) comparing the one or more unique probability maps (160) with a database of representations of three dimensional bodies to determine a closest match or best mapping between the or each unique probability map (160) and a representation determined from the database;

   wherein comparing the one or more unique probability maps (160) with a database of representations of three dimensional bodies to determine a closest match or best mapping comprises the steps of:

   (v) generating a three dimensional body image from the database of representations of three dimensional bodies, using variables that control the camera, the pose, and the body shape;
   (vi) generating a silhouette of the three dimensional body image;
   (vii) comparing the silhouette with the one or more unique probability maps (160) of the subject and determining the degree of match,
   (viii) iteratively refining the value of the variables through trial-and-error until the best mapping is obtained;
   (ix) generating three dimensional body data and/or measurements of the subject based on the best mapping and a look up table of known three dimensional body images measurements, wherein the method further comprises a step of
   (x) altering the three dimensional body images and/or generated silhouettes to account for imaging factors present within the one or more images of the subject.

2. The method according to claim 1, further comprising, prior to partitioning said one of more source images (150), applying one or more pre-processing stages to the one or more source images (150) to enhance the available data prior to segmentation.

3. The method according to claim 1 or claim 2, wherein combining the results of each segmentation method comprises using mathematical equations and/or heuristics.

4. The method according to any preceding claim, wherein generating three dimensional body data and/or measurements further comprises outputting three dimensional body data of the subject or other personal metrics based on the best mapping from step (iv).

5. A method according to any preceding claim, further comprising the step of:
after capturing said one or more images (150), providing one or more pre-rendered probability map(s) (160) representative of an expected shape and pose of the subject in the one or more images (150) and providing a sequence of segmentation methods (170) to apply according to the expected shape and pose of the subject in each image.

6. A method according to claim 5, further comprising the step of:
determining a pose of the subject and providing one or more probability maps (160) based on the pose which has been determined.

7. A method according to claim 1, wherein the imaging factors present are at least one of: camera pitch; camera yaw; camera distance and barrel distortion.

8. A method according to any preceding claim, further comprising the steps of:

determining unscaled measurements of the best match based on the LOOKUP table of known three dimensional body images measurements; and
scaling the best match measurements or scan based on reference data provided by the subject, said reference data being one or more of: subject height; distance between subject and camera; reference to a calibrated known object.

9. A method according to any one of claims 5 to 8, wherein partitioning the one or more images (150) into a plurality of segments comprises the step of:
comparing the location of pixels in the or each image with their corresponding locations on the pre-rendered probability maps (160) to determine the probability that a pixel represents the subject in the image.

10. A method according to any one of claims 5 to 9, wherein partitioning the one or more images (150) into a plurality of segments comprises the step of:
weighting pixels in the or each image according to the corresponding locations on the pre-rendered probability maps (160) to generate a corresponding weighted image, and identifying a colour and/or spatial distribution within these weighted images.

11. A method according to any previous claim, wherein after step (iii), the method further comprises the step of:

adding a region of uncertainty around the edges of the one or more unique probability maps (160) to compensate for variable line sharpness to produce a boundary of uncertain pixels;
identifying the gradient of the edges of the one or more unique probability maps (160) to determine the direction of the subject at each uncertain pixel to produce a corresponding vectored outline probability map;
applying the vectored outline probability map to the image (150) to determine points with the highest contrast; and identifying, at said point of highest contrast, a boundary pixel located on the edge of the subject.

12. A method according to claim 10 or claim 11, wherein a colour distribution is identified within the weighted images and identifying the colour distribution additionally comprises the steps of:

sampling pixels of the image (150) to identify their colour; and
mapping the location of the sampled pixels to the pre-rendered probability map to determine the expected colour of that region of the probability map.

13. A method according to claim 12, wherein identifying the colour distribution further comprises the steps of:

obtaining a probability distribution of the colour of the pixels within all said segments of the image (150); and
generating a multidimensional/multivariate probability distribution of the image (150) in intensity, colour and/or spatial space.

14. A method according to claims 12 or 13, further comprising the step of:
comparing the probability distribution with the expected colour of corresponding regions of the probability map (160) to determine the probability that a pixel represents the subject.


**Patentansprüche**

**1.** Verfahren zum Erzeugen dreidimensionaler Körperdaten einer Person aus einem oder mehreren Quellbildern, die unter Verwendung einer digitalen Abbildungsvorrichtung (100) aufgenommen wurden; wobei das Verfahren die Schritte umfasst:

(i) Aufnehmen von einem oder mehreren Quellbildern (150) der Person unter Verwendung einer digitalen Abbildungsvorrichtung (100);
(ii) Aufteilen des einen oder der mehreren Quellbilder (150) in eine Vielzahl von Segmenten unter Verwendung von Ergebnissen aus einer Sammlung von Segmentierungsverfahren (170);
(iii) Kombinieren der Ergebnisse jedes Segmentierungsverfahrens in Schritt (ii) unter Verwendung einer Gewichtung von Segmentierungsverfahren (170) in Bereichen der Unstimmigkeit, um für jedes Quellbild (150) eine einzige eindeutige Wahrscheinlichkeitskarte (160) zu erzeugen, welche die Person darstellt;
(iv) Vergleichen der einen oder mehreren eindeutigen Wahrscheinlichkeitskarten (160) mit einer Datenbank von Darstellungen dreidimensionaler Körper, um eine engste Übereinstimmung oder beste Zuordnung zwischen der oder jeder eindeutigen Wahrscheinlichkeitskarte (160) und einer aus der Datenbank bestimmten Darstellung zu bestimmen;

worin das Vergleichen der einen oder mehreren eindeutigen Wahrscheinlichkeitskarten (160) mit einer Datenbank von Darstellungen dreidimensionaler Körper, um eine engste Übereinstimmung oder beste Zuordnung zu bestimmen, die Schritte umfasst:

(v) Erzeugen eines dreidimensionalen Körperbildes aus der Datenbank von Darstellungen von dreidimensionalen Körpern unter Verwendung von Variablen, welche die Kamera, die Haltung und die Körperform steuern;
(vi) Erzeugen einer Silhouette des dreidimensionalen Körperbildes;
(vii) Vergleichen der Silhouette mit der einen oder den mehreren eindeutigen Wahrscheinlichkeitskarten (160) der Person und Bestimmen des Grades der Übereinstimmung;
(viii) iteratives Verfeinern des Wertes der Variablen durch Versuch und Irrtum, bis die beste Zuordnung erlangt wird;
(ix) Erzeugen von dreidimensionalen Körperdaten und/oder Messwerten der Person auf der Grundlage der besten Zuordnung und einer Verweistabelle von bekannten dreidimensionalen Körperbildmesswerten, worin das Verfahren ferner einen folgenden Schritt umfasst:
(x) Abändern der dreidimensionalen Körperbilder und/oder erzeugten Silhouetten, um in dem einem oder den mehreren Bildern der Person vorhandene Abbildungsfaktoren zu berücksichtigen.

**2.** Verfahren nach Anspruch 1, ferner umfassend: vor dem Aufteilen des einen oder der mehreren Quellbilder (150) erfolgendes Anwenden einer oder mehrerer Vorverarbeitungsstufen auf das eine oder die mehreren Quellbilder (150), um die verfügbaren Daten vor der Segmentierung zu verbessern.

**3.** Verfahren nach Anspruch 1 oder Anspruch 2, worin das Kombinieren der Ergebnisse jedes Segmentierungsverfahrens umfasst: Verwenden von mathematischen Gleichungen und/oder Heuristiken.

**4.** Verfahren nach einem der vorhergehenden Ansprüche, worin das Erzeugen von dreidimensionalen Körperdaten und/oder Messwerte ferner umfasst: Ausgeben von dreidimensionalen Körperdaten der Person oder anderer persönlicher Kennzahlen auf der Grundlage der besten Zuordnung aus Schritt (iv).

**5.** Verfahren nach einem der vorhergehenden Ansprüche, ferner den Schritt umfassend:
nach dem Aufnehmen des einen oder der mehreren Bilder (150) erfolgendes Bereitstellen einer oder mehrerer vorab gerenderter Wahrscheinlichkeitskarte(n) (160), die eine erwartete Form und Haltung der Person in dem einen oder den mehreren Bildern (150) darstellen, und Bereitstellen einer Folge von Segmentierungsverfahren (170), die entsprechend der erwarteten Form und Haltung der Person in jedem Bild anzuwenden sind.

**6.** Verfahren nach Anspruch 5, ferner den Schritt umfassend:
Bestimmen einer Haltung der Person und Bereitstellen einer oder mehrerer Wahrscheinlichkeitskarten (160) auf der Grundlage der Haltung, die bestimmt worden ist.

7. Verfahren nach Anspruch 1, worin die vorhandenen Abbildungsfaktoren mindestens eines von Folgendem sind: Kameraneigung; Kameraschwenkung; Kameraabstand und Tonnenverzeichnung.

8. Verfahren nach einem der vorhergehenden Ansprüche, ferner die Schritte umfassend:

   Bestimmen unversiegelter Messwerte der besten Übereinstimmung auf der Grundlage der Verweistabelle bekannter dreidimensionaler Körperbildmesswerte; und
   Skalieren der Messwerte oder des Scans mit der besten Übereinstimmung auf der Grundlage von Referenzdaten, die durch die Person bereitgestellt wurden, wobei die Referenzdaten eines oder mehr von Folgendem sind: Höhe der Person; Abstand zwischen Person und Kamera; Referenz auf ein kalibriertes bekanntes Objekt.

9. Verfahren nach einem der Ansprüche 5 bis 8, worin das Aufteilen des einen oder der mehreren Bilder (150) in eine Vielzahl von Segmenten den Schritt umfasst:
   Vergleichen der Position von Pixeln in dem oder jedem Bild mit ihren entsprechenden Positionen auf den vorab gerenderten Wahrscheinlichkeitskarten (160), um die Wahrscheinlichkeit zu bestimmen, dass ein Pixel die Person in dem Bild darstellt.

10. Verfahren nach einem der Ansprüche 5 bis 9, worin das Aufteilen des einen oder der mehreren Bilder (150) in eine Vielzahl von Segmenten den Schritt umfasst:
   Gewichten von Pixeln in dem oder jedem Bild gemäß den entsprechenden Positionen auf den vorab gerenderten Wahrscheinlichkeitskarten (160), um ein entsprechendes gewichtetes Bild zu erzeugen, und Identifizieren einer Farb- und/oder räumlichen Verteilung innerhalb dieser gewichteten Bilder.

11. Verfahren nach einem der vorhergehenden Ansprüche, worin nach Schritt (iii) das Verfahren ferner die Schritte umfasst:

   Hinzufügen eines Unsicherheitsbereichs um die Ränder der einen oder mehreren eindeutigen Wahrscheinlichkeitskarten (160), um eine variable Linienschärfe zu kompensieren, um eine Grenze unsicherer Pixel zu erzeugen;
   Identifizieren des Gradienten der Ränder der einen oder mehreren eindeutigen Wahrscheinlichkeitskarten (160), um die Richtung der Person an jedem unsicheren Pixel zu bestimmen, um eine entsprechende vektorisierte Umriss-Wahrscheinlichkeitskarte zu erzeugen;
   Anwenden der vektorisierten Umriss-Wahrscheinlichkeitskarte auf das Bild (150), um Punkte mit dem höchsten Kontrast zu bestimmen; und
   Identifizieren eines Grenzpixels, das sich am Rand des Motivs befindet, an dem Punkt mit dem höchsten Kontrast.

12. Verfahren nach Anspruch 10 oder Anspruch 11, worin eine Farbverteilung innerhalb der gewichteten Bilder identifiziert wird und das Identifizieren der Farbverteilung zusätzlich die Schritte umfasst:

   Abtasten von Pixeln des Bildes (150), um ihre Farbe zu identifizieren; und
   Zuordnen der Position der abgetasteten Pixel zu der vorab gerenderten Wahrscheinlichkeitskarte, um die erwartete Farbe dieses Bereichs der Wahrscheinlichkeitskarte zu bestimmen.

13. Verfahren nach Anspruch 12, worin das Identifizieren der Farbverteilung ferner die Schritte umfasst:

   Erlangen einer Wahrscheinlichkeitsverteilung der Farbe der Pixel innerhalb aller Segmente des Bildes (150); und
   Erzeugen einer mehrdimensionalen/multivariaten Wahrscheinlichkeitsverteilung des Bildes (150) nach Intensität, Farbe und/oder Raum.

14. Verfahren nach den Ansprüchen 12 oder 13, ferner den Schritt umfassend:
   Vergleichen der Wahrscheinlichkeitsverteilung mit der erwarteten Farbe von entsprechenden Bereichen der Wahrscheinlichkeitskarte (160), um die Wahrscheinlichkeit zu bestimmen, dass ein Pixel die Person darstellt.

**Revendications**

1. Procédé de génération de données corporelles en trois dimensions d'un sujet à partir d'une ou de plusieurs images source qui est/sont capturée(s) en utilisant un dispositif d'imagerie numérique (100) ; ledit procédé comprenant les étapes de :

(i) la capture d'une ou de plusieurs images source (150) du sujet en utilisant un dispositif d'imagerie numérique (100) ;
(ii) la division des une ou plusieurs images source (150) en une pluralité de segments en utilisant des résultats en provenance d'un ensemble de procédés de segmentation (170) ;
(iii) la combinaison, en utilisant une pondération de procédés de segmentation (170) au niveau de zones de divergence, des résultats de chaque procédé de segmentation de l'étape (ii) pour produire, pour chaque image source (150), une seule carte de probabilité unique (160) qui représente le sujet ;
(iv) la comparaison des une ou plusieurs cartes de probabilité uniques (160) avec une base de données de représentations de corps en trois dimensions pour déterminer une concordance la plus proche ou la meilleure cartographie entre la ou chaque carte de probabilité unique (160) et une représentation qui est déterminée à partir de la base de données ;

dans lequel la comparaison des une ou plusieurs cartes de probabilité uniques (160) avec une base de données de représentations de corps en trois dimensions pour déterminer une concordance la plus proche ou la meilleure cartographie comprend les étapes de :

(v) la génération d'une image corporelle en trois dimensions à partir de la base de données de représentations de corps en trois dimensions, en utilisant des variables qui commandent la caméra, la posture et la forme du corps ;
(vi) la génération d'une silhouette de l'image corporelle en trois dimensions ;
(vii) la comparaison de la silhouette avec les une ou plusieurs cartes de probabilité uniques (160) du sujet et la détermination du degré de concordance ;
(viii) l'affinage par itérations de la valeur des variables par l'intermédiaire de tâtonnements par essais et erreurs jusqu'à ce que la meilleure cartographie soit obtenue ;
(ix) la génération de données corporelles en trois dimensions et/ou de mesures du sujet sur la base de la meilleure cartographie et d'une table de consultation de mesures d'images corporelles en trois dimensions connues, dans lequel le procédé comprend en outre une étape d' :
(x) altération des images corporelles en trois dimensions et/ou des silhouettes générées pour prendre en compte des facteurs d'imagerie qui sont présents à l'intérieur des une ou plusieurs images du sujet.

2. Procédé selon la revendication 1, comprenant en outre, avant la division desdites une ou plusieurs images source (150), l'application d'une ou de plusieurs phases de prétraitement aux une ou plusieurs images source (150) pour améliorer les données disponibles avant la segmentation.

3. Procédé selon la revendication 1 ou la revendication 2, dans lequel la combinaison des résultats de chaque procédé de segmentation comprend l'utilisation d'équations et/ou d'heuristiques mathématiques.

4. Procédé selon l'une quelconque des revendications qui précèdent, dans lequel la génération de données corporelles en trois dimensions et/ou de mesures comprend en outre l'émission en sortie de données corporelles en trois dimensions du sujet ou d'autres mesures personnelles sur la base de la meilleure cartographie qui est issue de l'étape (iv).

5. Procédé selon l'une quelconque des revendications qui précèdent, comprenant en outre l'étape de :
après la capture desdites une ou plusieurs images (150), la fourniture d'une ou de plusieurs carte(s) de probabilité pré-rendue(s) (160) qui est/sont représentative(s) d'une forme et d'une posture attendues du sujet dans les une ou plusieurs images (150) et la fourniture d'une séquence de procédés de segmentation (170) destinés à être appliqués en fonction de la forme et de la posture attendues du sujet dans chaque image.

6. Procédé selon la revendication 5, comprenant en outre l'étape de :
la détermination d'une posture du sujet et la fourniture d'une ou de plusieurs cartes de probabilité (160) sur la base de la posture qui a été déterminée.

7. Procédé selon la revendication 1, dans lequel les facteurs d'imagerie qui sont présents sont au moins un facteur pris parmi : le tangage de la caméra ; le lacet de la caméra ; la distance de la caméra et la distorsion en barillet.

**8.** Procédé selon l'une quelconque des revendications qui précèdent, comprenant en outre les étapes de :

la détermination de mesures non mises à l'échelle de la meilleure concordance sur la base de la table de consultation de mesures d'images corporelles en trois dimensions connues ; et

la mise à l'échelle des mesures ou du scannage de la meilleure concordance sur la base de données de référence qui sont fournies par le sujet, lesdites données de référence étant une ou plusieurs données prises parmi : la taille du sujet ; la distance entre le sujet et la caméra ; une référence par rapport à un objet connu étalonné.

**9.** Procédé selon l'une quelconque des revendications 5 à 8, dans lequel la division des une ou plusieurs images (150) en une pluralité de segments comprend l'étape de :

la comparaison de la localisation de pixels dans la ou chaque image avec leurs localisations correspondantes sur les cartes de probabilité pré-rendues (160) pour déterminer la probabilité qu'un pixel représente le sujet dans l'image.

**10.** Procédé selon l'une quelconque des revendications 5 à 9, dans lequel la division des une ou plusieurs images (150) en une pluralité de segments comprend l'étape de :

la pondération de pixels dans la ou chaque image en fonction des localisations correspondantes sur les cartes de probabilité pré-rendues (160) pour générer une image pondérée correspondante et de l'identification d'une distribution de couleurs et/ou d'une distribution spatiale à l'intérieur de ces images pondérées.

**11.** Procédé selon l'une quelconque des revendications qui précèdent, dans lequel, après l'étape (iii), le procédé comprend en outre les étapes de :

l'ajout d'une région d'incertitude au voisinage des bords des une ou plusieurs cartes de probabilité uniques (160) pour compenser une netteté de ligne variable pour produire une frontière de pixels non certains ;

l'identification du gradient des bords des une ou plusieurs cartes de probabilité uniques (160) pour déterminer la direction du sujet au niveau de chaque pixel non certain pour produire une carte de probabilité de contour vectorisé correspondante ;

l'application de la carte de probabilité de contour vectorisé à l'image (150) pour déterminer des points qui présentent le contraste le plus élevé ; et

l'identification, au niveau dudit point de contraste le plus élevé, d'un pixel de frontière qui est localisé sur le bord du sujet.

**12.** Procédé selon la revendication 10 ou la revendication 11, dans lequel une distribution de couleurs est identifiée à l'intérieur des images pondérées et l'identification de la distribution de couleurs comprend de façon additionnelle les étapes de :

l'échantillonnage de pixels de l'image (150) pour identifier leur couleur ; et

la cartographie de la localisation des pixels échantillonnés selon la carte de probabilité pré-rendue pour déterminer la couleur attendue de cette région de la carte de probabilité.

**13.** Procédé selon la revendication 12, dans lequel l'identification de la distribution de couleurs comprend en outre les étapes de :

l'obtention d'une distribution de probabilité de la couleur des pixels à l'intérieur de tous lesdits segments de l'image (150) ; et

la génération d'une distribution de probabilité multidimensionnelle/à multiples variables de l'image (150) en termes d'intensité, de couleur et/ou d'espace spatial.

**14.** Procédé selon la revendication 12 ou 13, comprenant en outre l'étape de :

la comparaison de la distribution de probabilité avec la couleur attendue de régions correspondantes de la carte de probabilité (160) pour déterminer la probabilité qu'un pixel représente le sujet.

150

160

170

- skin detection
- active contours
- arm edges
- leg edges
- symmetry
- ...

Fig 1

Device displays live webcam feed with indicators (e.g. outline of anatomical position) for a particular pose — 210

Edge detector provided for outline — 220

Person detected within edges, maximum wait exceeded, or manual override used — 230

Capture image of user — 240

255

Change pose ←—no—— All images captured? — 250

yes

Optionally display images to user for analysis, offer to re-capture bad images — 260

Send images to processor (upload to server or send to dedicated application), optionally compressed — 270

Receive measurements, 3D scan, and/or meta data (e.g. guessed gender) — 280

200

Identify scale (calibration), such as user height — If required, apply scaling factor to results — 285

Optionally display results to user — 290

Fig 2

Load persistent data (e.g. skin tone estimates, probability maps, per-pose segmentation methods) — 300

Await input images — 310

no ← Has received images? — 315

yes

Preprocessing stages applied to each image, according to pose — 320

Segmentation methods applied to each image, according to pose — 330

Results of segmentation methods combined — 340

Optional final segmentation method applied using results from previous segmentations — 350

Fine (possibly sub-pixel) edge detection applied using results of segmentation method and original images — 360

Optionally send message to client containing information on how and when to receive results — 370

Send final segmentations (and optionally meta data, e.g. confidence in segmentations) to matching application (may be same or different application, may be another server) — 380

Fig 3

Blur unique probability map by 1 or 2 pixels /— 410

Identify gradient of blurred probability map at each pixel to generate a vectored outline probability map /— 420

For each vector, identify pixels along vector in source image with highest pixel-to-pixel contrast /— 430

Optionally compare colours of chosen pixels with nearby pixels to locate true edge with sub-pixel accuracy /— 440

Adjust unique probability map with true boundary /— 450

Optionally blur probability map again by 1 or 2 pixels and re-sharpen to remove high-level noise /— 460

Updated (possibly upscaled), accurate probability map produced /— 470

Fig 4

Fig 5